# EUROPEAN PATENT APPLICATION

(11) **EP 3 034 326 A1**
(43) Date of publication of application: **22.06.2016**
(21) Application number: 15174773.0
(22) Date of filing: 01.07.2015
(51) Int. Cl.: B60C 1/00, C08L 7/00, C08L 9/00, C08K 3/04

(54) **RUBBER MATERIAL FOR TIRE TREAD WITH PRICKING RESISTANCE, AND CHUNKING AND CHIPPING RESISTANCE, ITS PREPARATION AND APPLICATION**

(30) Priority: 18.12.2014 CN 201410790107
(71) Applicant: Shandong Linglong Tyre Co. Ltd., Shandong 265400 (CN)
(72) Inventor: Wang, Feng, Zhaoyuan City (CN); Sun, Tao, Zhaoyuan City (CN); Liu, Feng, Jinan City (CN); Wang, Junying, Zhaoyuan City (CN); Jiang, Kai, Zhaoyuan City (CN); Wang, Zhenling, Zhaoyuan City (CN); Li, Hao, Fuyang City (CN); Cong, Shouqing, Zhaoyuan City (CN)
(74) Representative: Hoffmann Eitle

(57) **Abstract**

The present invention relates to the field of tire tread, specifically, relates to a rubber material used for the tire tread with the properties of pricking resistance, and chunking and chipping resistance, its preparation method and the application thereof. The rubber material used for the tire tread in the present invention comprises: (1) 100 parts by weight of main rubber ingredients: including 50-95 parts by weight of natural cis-1,4-polyisoprene rubber and 5-50 parts by weight of synthetic rubber of styrene-butadiene copolymer; (2) compounding agents : based on 100 parts by weight of the main rubber ingredients, the said compounding agents including 10-20 parts by weight of white carbon black used as inorganic filler. The tire tread prepared by the rubber material in the present invention has the tear strength of 110.0Mpa or more and the cutting volume of 0.60cm³ or below, so that the tire tread has the excellent property of tear resistance so as to further make it have the properties of pricking resistance, and chunking and chipping resistance.

## Description

### Technical field

The present invention relates to the field of tire tread, especially, relates to a rubber material composition for all steel radial tire, specifically, relates to a rubber material used for the tire tread with the properties of pricking resistance, and chunking and chipping resistance, its preparation method and the application thereof.

### Background art

As a result of natural rubber having the best property of tear resistance, and synthetic rubber having poorer property of tear resistance, the natural rubber is widely used as crude rubber system in tire tread of all steel radial tire.

The proportion of natural rubber to synthetic rubber in current rubber formulas for the tire tread is 80/20, and the cutting volume of current rubber formulas is 0.70cm³. Besides, the current rubber has general pricking resistance, and chunking and chipping resistance. Pricking resistance, and chunking and chipping resistance are detected and measured by cutting test machine. The smaller reported value means the higher anti-cutting ability.

Because the carbon black and the rubber have higher physical adsorption capacity, higher wear resistance is brought about, so that carbon black and rubber are generally used as reinforcing filler of filling system in the tire industry.

The carbon black used in tire tread level generally has iodine absorption value of 110g/kg or more, dibutyl phthalate (DBP) absorption value of 110×10⁻⁵m³/kg or more, specific surface area of 110×10³m²/kg or more by nitrogen adsorption method. It is generally believed that the carbon black with high iodine absorption, high DBP value, and high specific surface area of nitrogen absorption will have better wear resistance performance.

The low structure carbon black N115 in the form of fine particles (i.e. particle size is the smallest) used in current rubber formulas for the tire tread has the iodine absorption value of 160g/kg, DBP absorption value of 113×10⁻⁵m³/kg, specific surface area of 137 × 10³m²/kg or more by nitrogen adsorption method, and the pricking resistance of this rubber is not good.

Because the way of mixing white carbon black and rubber can greatly improve the tear resistance of rubber, it has been widely applied to all steel radial tire which has high requirement on tear resistance performance.

However, there is a space to further improve the tear resistance of the current tire tread.

### Summary of the invention

The technical problem to be solved by the present invention lies in that the current rubber material for tire tread, especially for all steel radial tire tread, can't possess all properties of pricking resistance, chunking and chipping resistance, and tear resistance.

The inventor found that synthetic rubber is widely used in the tire tread so as to enhance pricking resistance, but at the same time the use of synthetic rubber brings negative effect, i.e. tear resistance is worse off. The use of fine particles of carbon black is conducive to enhancing the tear resistance, but the pricking resistance is not good enough. At the same time, increasing the amount of white carbon black can further enhance the tear resistance of the rubber material for the tire tread.

The present invention relates to a tire tread of all steel radial tire comprising 50-100phr natural cis-1,4-polyisoprene rubber, 0-50phr synthetic rubber of styrene-butadiene copolymer, 40-50phr organic filler and 0-15phr inorganic filler. The tire tread comprises the following components: a cis-1,4-polyisoprene rubber and a synthetic rubber based on 23.5wt% tyrene group; a special reinforced organic filler with iodine absorption value of 110g/kg or more, dibutyl phthalate (DBP) absorption value of 115 × 10⁻⁵m³/kg or more, and specific surface area of 130 × 10³m²/kg or more by nitrogen adsorption method; and a special reinforced inorganic filler with specific surface area of 150 × 10³m²/kg or more by nitrogen adsorption method.

Wherein, the test standard of the iodine absorption value is GB/T for 3780.1-2006, and the specific steps are shown as follows: infiltrating sample with iodine solution, fully mixing them, after stroking and adsorbing, determining the amount of residual iodine in the solution by titration, and calculating the amount of iodine adsorbed in the sample per unit mass as the iodine absorption number of the sample.

Method for determining DBP adsorption value is the method A in GB/T 3780.2-2007, and the specific steps are shown as follows: adding dibutyl phthalate(DBP) with the constant speed titrator onto the sample in the mixing tank of the oil absorptometer, wherein along with the increase of oil absorption, the viscosity of the mixture increases, transmitting the viscosity to the torque sensor system of the oil absorptometer, reading the added oil volume after closing the oil absorptometer and the titrator, and considering the oil volume adsorbed in the carbon black per unit mass as the DBP absorption value of the sample.

The nitrogen adsorption method for determining the specific surface area comprises determining the N ₂ adsorption-desorption isotherm of the sample by the gas adsorption analyzer (model: Autosorb-iQ, manufacturer: QuantaChrome), wherein the determination pressure is pip⁰= 10⁻⁷∼1. The specific surface area value determined by nitrogen adsorption method is obtained directly through selecting multipoint BET method in the computer program.

Specifically, the present invention provides the following technical solutions:
The present invention provides a rubber material for the tire tread, is characterized in comprising the following components:
   (1) 100 parts by weight of main rubber ingredients: including 50-95 parts by weight of natural cis-1,4-polyisoprene rubber and 5-50 parts by weight of synthetic rubber of styrene-butadiene copolymer;
   (2) compounding agents: based on 100 parts by weight of the main rubber ingredients, the said compounding agents including 10-20 parts by weight of white carbon black used as inorganic filler.

Preferably, in the above mentioned rubber material for the tire tread, the content of the styrene group in the said synthetic rubber is 23.5wt%

Preferably, in the above mentioned rubber material for the tire tread, based on 100 parts by weight of the main rubber ingredients, said compounding agents of the rubber material further include 2-7 parts by weight of antioxidants, 1.8-2.5 parts by weight of stearic acid, 3-4 parts by weight of zinc oxide, 1-2 parts by weight of sulfur and 0.5-1.5 parts by weight of accelerator.

Preferably, in the above mentioned rubber material for the tire tread, said antioxidants comprise 0.8-1.2 parts by weight of antioxidant N-(1,3-dimethyl) butyl-N'-phenyl-p-phenylenediamine, 0.8-1.2 parts by weight of antioxidant poly(1,2-dihydro-2,2,4-trimethylquinoline), and 0.8-1.2 parts by weight of antioxidant microcrystalline wax.

Preferably, in the above mentioned rubber material for the tire tread, the amount of said natural cis-1,4-polyisoprene rubber is 70-80 parts by weight, and the amount of said styrene-butadiene copolymer is 20-30 parts by weight.

Preferably, in the above mentioned rubber material for the tire tread, the amount of said natural cis-1,4-polyisoprene rubber is 50-60 parts by weight, and the amount of said styrene-butadiene copolymer is 40-50 parts by weight.

Preferably, in the above mentioned rubber material for the tire tread, the amount of said white carbon black used as inorganic filler is 15-20 parts by weight.

Preferably, in the above mentioned rubber material for the tire tread, based on 100 parts by weight of the main rubber ingredients, the rubber material comprises 40-50 parts by weight of organic filler, preferably 45-50 parts by weight of organic filler.

Preferably, in the above mentioned rubber material for the tire tread, based on 100 parts by weight of the main rubber ingredients, the rubber material further comprises 40-50 parts by weight of carbon black.

Preferably, in the above mentioned rubber material for the tire tread, the glass transition temperature of the rubber material for the tire tread is (-50)∼(-20)°C.

Preferably, in the above mentioned rubber material for the tire tread, the said organic filler is rice hull powder.

Preferably, in the above mentioned rubber material for the tire tread, the organic filler has the iodine absorption value of 110g/kg or more, dibutyl phthalate (DBP) absorption value of 115 × 10⁻⁵m³/kg or more, and specific surface area of 130 × 10³m²/kg or more by nitrogen adsorption method.

Preferably, in the above mentioned rubber material for the tire tread, the said inorganic filler is white carbon black, which has specific surface area of 150 × 10³m²/kg or more by nitrogen adsorption method.

Preferably, in the above mentioned rubber material for the tire tread, the said rubber material for the tire tread has the tear strength of 110.0MPa or more, and the cutting volume of 0.60cm³ or below.

Preferably, in the above mentioned rubber material for the tire tread, the rubber material is the one for the tire tread of all steel radial tire.

The present invention further provides the use of the above mentioned rubber material for the tire tread to prepare the tire tread of all steel radial tire.

The present invention further provides a method of preparing the above mentioned rubber material for the tire tread, which comprises the following steps:
(1) non production milling step: milling said rubber material used for the tire tread for about 2-3min until the temperature of the rubber material reaches 150-165 °C;
(2) production milling step: adding sulfur into the rubber material obtained in step (1), and then milling the rubber until the temperature of the rubber material reaches 100-120°C.

The present invention further provides a tire tread, which is prepared by the above mentioned rubber material for the tire tread.

The present invention further provides a tire, which is prepared by the above mentioned tire tread.

Preferably, the above mentioned tire tread is the one of all steel radial tire tread; the above mentioned tire is the one of all steel radial tire.

The present invention further provides the use of the above mentioned rubber material for the tire tread, the above mentioned tire tread or the above mentioned tire in the tire field.

The present invention further provides the use of the above mentioned rubber material for the tire tread, the above mentioned tire tread or the above mentioned tire in the all steel radial tire.

The white carbon black in the present invention is the generic name of white powdery and X- ray amorphous silicic acid and silicate products, mainly refers to the silicon dioxide obtained by precipitation, silicon dioxide obtained by gas phase method and ultrafine silicon dioxide gel, and further includes powdery synthetic aluminium silicate and calcium silicate etc.. White carbon black is a porous material represented by the formula of SiO_{2·}nH₂O, wherein nH₂O exists in the form of surface hydroxyl group. The commercially available white carbon black is used in the present invention.

The tire tread prepared by the rubber material in the present invention has the tear strength of 110.0Mpa or more and the cutting volume of 0.60cm³ or below, so that the tire tread has the excellent property of tear resistance so as to further make it have the properties of pricking resistance, and chunking and chipping resistance.

### Embodiment

In order to solve the existing problem of all steel radial tire tread having poor performance of tear resistance, a preferred embodiment of the present invention provides an all steel radial tire with a rubber tread. Based on 100 parts by weight of rubber material for the tire tread, the said tire tread comprises 50-100 parts of natural cis-1,4-polyisoprene rubber and 0-50 parts of synthetic rubber of styrene-butadiene copolymer, together with 40-50 parts special reinforced organic filler and 10-20 parts of white carbon black used as inorganic filler. Among them, the Tg of synthetic rubber is between (-50) to (-20) °C, the content of styrene group is 23.5%; the organic filler can be combined with the rubber molecules by strong physical adsorption force.

The milling method of rubber composition can be carried out through the methods known by the person skilled in the rubber milling filed. For example, under normal conditions, the components are milled in at least two stages, i.e., at least one non-production milling stage, followed by one production milling stage. Rubber and polymer resin are milled in one or more non-production milling stage.

The rubber material for the tread and the preparation method thereof in the present invention are further illustrated in the following text based on the embodiments.

In the examples below, the used agent information is shown as follows:
Cis-1,4-polyisoprene rubber: Manufacturer: Shanghai Jinshan Petrochemical Co., Ltd.; Purity: 99%
Styrene-butadiene copolymer: Type: SBR 1502; Manufacturer: Sinopec QiluPetrochemical Company; Styrene group content of 23.5wt%.
Antioxidant 4020: Chemical Name: N-(1,3-dimethyl) butyl-N'-phenyl-p-phenylenediamine, Manufacturer: Jiangsu sinorchem Technology Co., Ltd..
Antioxidant RD: Chemical Name: poly(1,2-dihydro-2,2,4-trimethylquinoline) , Manufacturer: Shandong Exxon Chemical Co., Ltd.
Antioxidant microcrystalline wax: Type: microcrystalline wax 654, Drop melting point( °C ) :65 °C , Oil content (wt%): 3%, Chromatic number: 1, Penetration (1/10mm): 2mm, Manufacturer: German Rhein Chemie Corp.
Stearic acid: Manufacturer: Jiangsu Rugao Chemical Co., Ltd.
Zinc oxide: AR, Qingdao Haiyan Chemical Co., Ltd.
Sulfur: AR, Shandong Linyi Hubin Chemical Co., Ltd.
Accelerator: Type: Accelerator NS, Chemical Name: N-tert-butylbenzothiazole-2-sulphenamide; Manufacturer: Shandong Yanggu Huatai Chemical Co., Ltd.
Carbon black N115: Manufacturer: Fushun Carbon black Plant.
White carbon black: Type: Z1165, Manufacturer: Korean Rhodia Co., Ltd.
Organic filler: rice hull powder, specifications: 200 mesh (with Taylor screen as standard), Manufacturer: Xinglong rice hull powder factory

The instrument information used in the following examples are shown as follows:
BR Banbury milling machine: Type: BR1600-GLT, Manufacturer: USA FARREL company Differential Scanning Calorimeter: Type: DSC-60, Manufacturer: Shimadzu Corporation

Gel permeation chromatography and laser light scattering instrument: Type: miniDAWN chromatographic system, laser light scattering instrument Optilab rEX detector; Manufacturer: the chromatographic system of the Shimadzu Corporation, laser light scattering and refractive index detector of USA Wyatt Technology Corporation.

### Example 1

In the BR Banbury milling machine, the rubber composition was prepared based on the components specified in Table 1. The preparation process adopted two separate feeding and milling stages, i.e., a non production milling stage and a production milling stage. In non production stage, the rubber material was milled for 2-3min until the temperature of rubber material reached 160 °C. The milling time of the production stage was that of making the temperature of rubber material reach 115 °C. Specifically, the process is shown as follows:

The main rubber ingredients (cis-1,4-polyisoprene rubber, styrene-butadiene copolymer), carbon black N115 as reinforcing agent, white carbon black, antioxidants (antioxidant 4020, antioxidant RD, antioxidant microcrystalline wax), fatty acid as stearic acid and zinc oxide were milled in a non production milling stage for 2-3min, until the temperature of the rubber material reached 160 °C; and then sulfur and accelerator were added into the rubber material to carry out production milling until the temperature of the rubber material reached 115 °C. All samples were vulcanized at 151 °C for 30min.

The rubber compositions herein were called as sample 1, sample 2, and sample 3. Sample 1 herein was used as control sample, i.e., the optimization ratio of rubber ingredients was not used in the rubber composition thereof.

All samples were vulcanized at 151 °C for 30min. Appearance and physical properties of the vulcanized samples 1 to 3 were shown in table 2.

**Table 1 The components of the rubber composition for samples 1-3 (unit: kg)**

| sample | control sample 1 | 2 | 3 |
|---|---|---|---|
| Cis-1,4-polyisoprene rubber | 80.0 | 100.0 | 50.0 |
| Styrene-butadiene copolymer | 20.0 | 0.0 | 50.0 |
| Carbon black N115 | 42.5 | 42.5 | 42.5 |
| White carbon black | 10.0 | 10.0 | 10.0 |
| Antioxidant 4020 | 1.0 | 1.0 | 1.0 |
| Antioxidant RD | 1.0 | 1.0 | 1.0 |
| Antioxidant microcrystalline wax | 1.0 | 1.0 | 1.0 |
| Stearic acid | 2.0 | 2.0 | 2.0 |
| Zinc oxide | 3.5 | 3.5 | 3.5 |
| Sulfur | 1.5 | 1.5 | 1.5 |
| Accelerator | 1.0 | 1.0 | 1.0 |

The weight-average molecular weight of the copolymers of sample 2 and sample 3 in the example were determined as 350000-580000 by gel permeation chromatography and laser light scattering instrument, with 50mM mixture of NaH₂PO₄ solution and methanol (70:30% (v/v)) as the mobile phase, and PEG 10000 as standard substance.

The cutting volume and tear strength were tested on each sample, and specific methods were shown as follows:

Test method for cutting volume: RCC-I type of rubber dynamic cutting test machine produced by Beijing Wanhuiyifang technology development Co., Ltd. was used to test the cutting volume, the rotation speed of the sample was 720r·min⁻¹, the cutting frequency was 120 min⁻¹, and the cutting time was 20min. To detect the cutting volume, the smaller reported value means the higher anti-cutting performance.

Test method for tear strength: the method C in GB/T 529-2008 was used to detect tear strength of the samples in the example. The samples with crescent shaped cut were continuously stretched by the stretch test machine (type: XL-250A; manufacturer: Guangzhou Guangcai Experimental Instrument Co. Ltd.), until the sample torn. To detect the tear strength, the higher reported value means the higher tear resistance performance.

**Table 2 Appearance and physical properties of the vulcanized samples 1-3**

| 151 °C *30min vulcanization | sample1 | sample2 | sample3 |
|---|---|---|---|
| cutting volume /cm³ | 0.70 | 1.00 | 0.35 |
| tear strength / kN·m⁻¹ | 100.0 | 120.0 | 80.0 |

The detection results of example 1 were shown as table 2, and the results indicated that: when the proportion of styrene-butadiene copolymer in main rubber ingredients increased to 50%, the cutting volume of sample 3 decreased to 0.35cm³, and its anti-cutting ability was greatly improved. Therefore, the way of increasing the proportion of styrene-butadiene copolymer in raw materials can effectively improve the anti-cutting ability of the rubber material for the tire tread.

### Example 2

In the BR Banbury milling machine, the rubber composition was prepared based on the components specified in Table 3. The preparation process adopted two separate feeding and milling stages, i.e., a non production milling stage and a production milling stage. In non production stage, the rubber material was milled for 2-3min until the temperature of rubber material reached 160°C. The milling time of the production stage was to that of making the temperature of rubber material reach 115 °C.

The main rubber ingredients (cis-1,4-polyisoprene rubber, styrene-butadiene copolymer), carbon black N 115 as reinforcing agent, organic filler of rice hull powder, white carbon black, antioxidants (antioxidant 4020, antioxidant RD, antioxidant microcrystalline wax), stearic acid as fatty acid and zinc oxide were milled in the non production milling stage for 2-3min, until the temperature of the rubber material reached 160°C; and then sulfur and accelerator were added into the rubber material to carry out production milling until the temperature of the rubber material reached 115 °C . All samples were vulcanized at 151 °C for 30min.

The rubber compositions herein were called as sample a, sample b, sample c, sample d and sample e. Sample a herein was used as control sample, i.e., the optimization amount of filler was not used in filler system thereof.

All samples were vulcanized at 151 °C for 30min. Appearance and physical properties of the vulcanized samples a to e were shown in table 4.

**Table 3 raw materials for the samples a-e (unit: kg)**

| sample | control sample a | b | c | d | e |
|---|---|---|---|---|---|
| non production milling stage | | | | | |
| Cis-1,4-polyisoprene rubber | 80.0 | 80.0 | 80.0 | 80.0 | 50 |
| Styrene-butadiene copolymer | 20.0 | 20.0 | 20.0 | 20.0 | 50 |
| Carbon black N115 | 42.5 | | | | |
| Special organic filler | | 40.0 | 45.0 | 50.0 | 50 |
| White carbon black | 10.0 | 10.0 | 10.0 | 10.0 | 10.0 |
| Antioxidant 4020 | 1.0 | 1.0 | 1.0 | 1.0 | 1.0 |
| Antioxidant RD | 1.0 | 1.0 | 1.0 | 1.0 | 1.0 |
| Antioxidant microcrystalline wax | 1.0 | 1.0 | 1.0 | 1.0 | 1.0 |
| Stearic acid | 2.0 | 2.0 | 2.0 | 2.0 | 2.0 |
| Zinc oxide | 3.5 | 3.5 | 3.5 | 3.5 | 3.5 |

| production milling stage | | | | | |
|---|---|---|---|---|---|
| Sulfur | 1.5 | 1.5 | 1.5 | 1.5 | 1.5 |
| Accelerator | 1.0 | 1.0 | 1.0 | 1.0 | 1.0 |

**Table 4 Appearance and physical properties of the vulcanized samples a-e**

| 151 °C *30min vulcanization | a | b | c | d | e |
|---|---|---|---|---|---|
| cutting volume /cm³ | 0.70 | 0.80 | 0.70 | 0.60 | 0.45 |
| tear strength / kN·m⁻¹ | 100.0 | 80.0 | 90.0 | 100.0 | 100.0 |

The weight-average molecular weight of the samples b, c, d and e in the example was determined as 350000-580000 respectively by using the method of example 1.

The cutting volume and the tear strength were tested by the method of example 1, and the results were shown as table 4. The results indicated that: compared with the sample a of control example a, when the weight of organic filler in the raw materials reached 50 parts by weight, the sample d had the same tear strength as the sample a, but the cutting volume of the sample d significantly reduced to 0.60cm³. When the proportion of styrene-butadiene copolymer in the main rubber ingredients increased, the cutting volume of sample e significantly reduced to 0.45. Therefore, the way of adding the organic filler into the raw materials can reduce the cutting volume of the rubber material for the tire tread. With increasing the proportion of organic filler, the cutting volume decreased gradually and the tear strength increased gradually, so as to effectively improve the anti-cutting ability and tear resistance of the rubber material for tire tread. Increasing the proportion of styrene-butadiene copolymer in raw materials can further improve the anti-cutting ability of the rubber material.

### Example 3

In the BR Banbury milling machine, the rubber composition was prepared based on the components specified in Table 5. The preparation process adopted two separate feeding and milling stages, i.e., a non production milling stage and a production milling stage. The rubber material was milled in the non production stage for 2-3 mins until the temperature of the rubber material reached 160°C.The milling time of the production stage was that of making the temperature of rubber material reach 115 °C.

The main rubber ingredients (cis-1,4-polyisoprene rubber, styrene-butadiene copolymer), carbon black N115 as reinforcing agent, white carbon black, antioxidants (antioxidant 4020, antioxidant RD, antioxidant microcrystalline wax), stearic acid as fatty acid and zinc oxide were milled in the non production milling stage for 2-3min, until the temperature of the rubber material reached 160°C; and then sulfur and accelerator were added into the rubber material to carry out production milling until the temperature of the rubber material reached 115°C. All samples were vulcanized at 151 °C for 30min.

The rubber compositions herein were called as sample A, sample B, sample C, sample D and sample E. Sample A herein was used as control sample, i.e., the optimization amount of white carbon black was not used in filler system thereof.

All samples were vulcanized at 151 °C for 30min. Appearance and physical properties of the vulcanized samples A to E were shown in table 6.

**Table 5 raw materials for the samples A-E (unit: kg)**

| sample | control sample A | B | C | D | E |
|---|---|---|---|---|---|
| non production milling stage | | | | | |
| Cis-1,4-polyisoprene rubber | 80.0 | 80.0 | 80.0 | 60 | 50 |
| Styrene-butadiene copolymer | 20.0 | 20.0 | 20.0 | 40 | 50 |
| Carbon black N 115 | 42.5 | 42.5 | 42.5 | 42.5 | 42.5 |
| White carbon black | 10.0 | 15.0 | 20.0 | 15.0 | 20.0 |
| Antioxidant 4020 | 1.0 | 1.0 | 1.0 | 1.0 | 1.0 |
| Antioxidant RD | 1.0 | 1.0 | 1.0 | 1.0 | 1.0 |
| Antioxidant microcrystalline wax | 1.0 | 1.0 | 1.0 | 1.0 | 1.0 |
| Stearic acid | 2.0 | 2.0 | 2.0 | 2.0 | 2.0 |
| Zinc oxide | 3.5 | 3.5 | 3.5 | 3.5 | 3.5 |

| production milling stage | | | | | |
|---|---|---|---|---|---|
| Sulfur | 1.5 | 1.5 | 1.5 | 1.5 | 1.5 |
| Accelerator | 1.0 | 1.0 | 1.0 | 1.0 | 1.0 |

**Table 6 Appearance and physical properties of samples A-E**

| 151 °C *30min vulcanization | A | B | C | D | E |
|---|---|---|---|---|---|
| cutting volume /cm³ | 0.70 | 0.60 | 0.50 | 0.50 | 0.40 |
| tear strength / kN·m⁻¹ | 100.0 | 110.0 | 120.0 | 110.0 | 115.0 |

The weight-average molecular weight of the samples B, C, D and E in the example was determined as 350000-580000 respectively by using the method of example 1.

The cutting volume and the tear strength of the samples were tested by the method of example 1, and the results were shown as table 6. The results indicated that: compared with the sample A of control example, when the weight of white carbon black in the raw materials increased to 15-20 parts, the cutting volume of the rubber material for tire tread of sample B and sample C reduced to 0.5-0.6cm³, and the tear strength increased to 110-120 kN·m⁻¹. Both the anti-cutting ability and the tear resistance of the latter two are obviously better than those of sample A. When the proportion of styrene-butadiene copolymer in the main rubber ingredients increased, the cutting volume of sample D and sample E significantly reduced to 0.4-0.5, so as to further improve the anti-cutting ability of the samples. Therefore, the way of increasing the amount of white carbon black, can effectively improve the anti-cutting ability and the tear resistance of the rubber material for tire tread. With increasing the amount of white carbon black, the cutting volume decreased gradually and the tear strength increased gradually. Increasing the proportion of styrene-butadiene copolymer in raw materials can further improve the anti-cutting ability of the samples.

Test method for glass transition temperature: the glass transition temperature of each sample in examples 1 to 3 is detected by means of differential scanning calorimetry. Test conditions set as air atmosphere, heating rate of 20 °C /min, test temperature range from room temperature to 800 °C. The test results indicated that samples 2, 3, b, c, d, e, B, C, D, E is random copolymer, and the glass transition temperature of them were between (-50) °C to (-20) °C.

Cutting volume in the present invention is detected by cutting test machine. The smaller reported value means the higher anti-cutting ability. Tear strength can also be detected according to the test method for tearing strength of the tire industry acceptable. The higher reported value means the higher tear strength.

In the present invention, the rubber used as base material is natural cis-1,4-polyisoprene rubber and styrene-butadiene copolymer, wherein the copolymer contains 23.5wt% of styrene group. In addition, the special reinforced organic filler is also used on the basis of specific amount in the formulas, and the amount of inorganic filler of white carbon black is increased in the formulas.

The use of natural cis-1,4-polyisoprene rubber and styrene-butadiene copolymer, together with the special reinforced organic filler is considered important for improving the anti-cutting ability and the tear resistance of the tire.

These results indicate that the way of using natural cis-1,4-polyisoprene rubber and styrene-butadiene copolymer, together with the special reinforced organic filler in the rubber material for the tire tread, or increasing the amount of inorganic filler, can make the wear resistance, stretchability and fatigue resistance of tire tread improve obviously.

## Claims

1. A rubber material for the tire tread is **characterized in** comprising:
(1) 100 parts by weight of main rubber ingredients: including 50-95 parts by weight of natural cis-1,4-polyisoprene rubber and 5-50 parts by weight of synthetic rubber of styrene-butadiene copolymer;
(2) compounding agents: based on 100 parts by weight of the main rubber ingredients, the said compounding agents including 10-20 parts by weight of white carbon black used as inorganic filler.

2. The rubber material for the tire tread according to claim 1, wherein, the content of the styrene group in said synthetic rubber is 23.5wt%.

3. The rubber material for the tire tread according to claim 2, wherein based on 100 parts by weight of the main rubber ingredients, said compounding agents further include 2-7 parts by weight of antioxidants, 1.8-2.5 parts by weight of stearic acid, 3-4 parts by weight of zinc oxide, 1-2 parts by weight of sulfur and 0.5-1.5 parts by weight of accelerator.

4. The rubber material for the tire tread according to claim 3, wherein said antioxidants comprise 0.8-1.2 parts by weight of antioxidant N-(1,3-dimethyl) butyl-N'-phenyl-p-phenylenediamine, 0.8-1.2 parts by weight of antioxidant poly(1,2-dihydro-2,2,4-trimethylquinoline), and 0.8-1.2 parts by weight of antioxidant microcrystalline wax.

5. The rubber material for the tire tread according to claim 4, wherein the amount of said natural cis-1,4-polyisoprene rubber is 70-80 parts by weight, and the amount of said styrene-butadiene copolymer is 20-30 parts by weight.

6. The rubber material for the tire tread according to claim 4, wherein the amount of said natural cis-1,4-polyisoprene rubber is 50-60 parts by weight, and the amount of said styrene-butadiene copolymer is 40-50 parts by weight.

7. The rubber material for the tire tread according to claim 5, wherein the amount of said white carbon black used as inorganic filler is 15-20 parts by weight.

8. The rubber material for the tire tread according to claim 6, wherein the amount of said white carbon black used as inorganic filler is 15-20 parts by weight.

9. The rubber material for the tire tread according to claim 5, wherein based on 100 parts by weight of the main rubber ingredients, the rubber material comprises 40-50 parts by weight of organic filler.

10. The rubber material for the tire tread according to claim 6, wherein based on 100 parts by weight of the main rubber ingredients, the rubber material comprises 40-50 parts by weight of organic filler.

11. The rubber material for the tire tread according to claim 6, wherein based on 100 parts by weight of the main rubber ingredients, the rubber material further comprises 40-50 parts by weight of carbon black.

12. The rubber material for the tire tread according to claim 7, wherein based on 100 parts by weight of the main rubber ingredients, the rubber material further comprises 40-50 parts by weight of carbon black.

13. The rubber material for the tire tread according to claim 8, wherein based on 100 parts by weight of the main rubber ingredients, the rubber material further comprises 40-50 parts by weight of carbon black.

14. A method of preparing the rubber material for the tire tread according to any one of claims 9 to 13, comprising the following steps:
(1) non production milling step: milling said rubber material used for the tire tread for 2-3min until the temperature of the rubber material reaches 150-165°C;
(2) production milling step: adding sulfur into the rubber material obtained in step (1), and then milling the rubber material until the temperature of the rubber material reaches 100-120°C.

15. Tire tread, which is prepared by the said rubber material for the tire tread according to any one of claims 9 to 13.
